# EUROPEAN PATENT SPECIFICATION

(11) **EP 4 390 354 B1**
(45) Date of publication and mention of the grant of the patent: **10.06.2026**
(21) Application number: 22216169.7
(22) Date of filing: 22.12.2022
(51) Int. Cl.: G01L 11/00, G01F 1/12, G01F 15/02

(54) **A METHOD AND SYSTEM FOR DETERMINING A FLUID PRESSURE AT A FLUID FLOW METER BEING INSTALLED IN A PIPE NETWORK**
VERFAHREN UND SYSTEM ZUR BESTIMMUNG EINES FLUIDDRUCKS AN EINEM IN EINEM ROHRNETZWERK INSTALLIERTEN DURCHFLUSSMESSER
PROCÉDÉ ET SYSTÈME POUR DÉTERMINER UNE PRESSION DE FLUIDE AU NIVEAU D'UN DÉBITMÈTRE DE FLUIDE INSTALLÉ DANS UN RÉSEAU DE TUYAUX

(43) Date of publication of application: 26.06.2024
(73) Proprietor: Kamstrup A/S, 8660 Skanderborg (DK)
(72) Inventor: Christiansen, Lars, 8660 Skanderborg (DK); Dupont, Sune Hoveroust, 8660 Skanderborg (DK); Sørensen, Jens Lykke, 8660 Skanderborg (DK)
(74) Representative: Patentanwälte Hemmer Lindfeld Frese Partnerschaft mbB

(56) References cited:
- EP-A1- 3 112 823
- US-A1- 2004 064 217
- US-A1- 2010 289 652
- US-A1- 2010 313 958

## Description

### TECHNICAL FIELD

The present disclosure is directed to a method according to appended claim 1 and a system according to appended claim 14 for determining a fluid pressure at a fluid flow meter being installed in a pipe network. In particular, the pipe network is a water supply network for supplying water to a plurality of consumer households. Each household is typically equipped with at least one of such fluid flow meters that are predominantly used for determining water consumption of a consumer household for billing purposes.

### BACKGROUND

A utility provider typically operates a pipe network for supplying water to a plurality of households. In order to determine water consumption at each household for billing purposes, each household is typically equipped with a fluid flow meter. It is important for a utility provider to have as much information about the fluid pressure in the pipe network as possible. On the one hand, the utility provider must ensure a minimum fluid pressure for all connected consumer households, even for those consumers at the highest altitude. On the other hand, a too high fluid pressure means unnecessarily high energy consumption for pumping, more water loss by leakage and generally more damage to components. The pipe network may therefore be equipped with pressure sensors at selected positions in the pipe network. However, the installation and maintenance of pressure sensors all over the pipe network is expensive. Furthermore, collecting pressure data from a plurality of pressure sensors requires a complex data acquisition system that needs to be set up and maintained.

It is therefore an object of the present invention to provide a method and a system that allows determining the fluid pressure at each fluid flow meter without installing and maintaining additional pressure sensors and/or data acquisition system in the pipe network.

A water monitoring, water conservation and water usage information sharing device according to the prior art has been disclosed in US2010/289652A1.

### SUMMARY

According to a first aspect of the present invention, a method is provided for determining a fluid pressure at a fluid flow meter being installed in a pipe network that is supplied with fluid at a varying and/or variable input pressure. The inventive method comprises the following steps:
- recording input pressure information, wherein the input pressure information allows to determine a difference between the input pressure in at least one first considered time-window and the input pressure in at least one second considered time-window;
- aggregating, in the fluid flow meter at least during the at least one first considered time-window and during the at least one second considered time-window, statistical data of a plurality of fluid flow events and/or fluid volume consumption events;
- providing the aggregated statistical data in regular intervals and/or on demand to a head-end system that has access to the input pressure information; and
- determining, by the head-end system, a fluid pressure at the fluid flow meter based on:
   - a change in the aggregated statistical data between the at least one first considered time-window and the at least one second considered time-window, and
   - the difference between the input pressure in the at least one first considered time-window and the input pressure in the at least one second considered time-window.

The fluid is here preferably water. The inventive idea makes use of the fact that the input pressure to the pipe network is not constant over time. It may vary over time due to varying consumption demand or it may be varied on purpose for optimising the operation of the water supply network. Irrespective of whether the changes in the input pressure are initiated on purpose or experienced dynamic behaviour of the pipe network, the utility provider has information about such changes. For example, the pipe network is typically equipped with some pressure sensors at selected positions in the pipe network, so that the utility provider may have access to measured fluid pressure values at those selected positions in the pipe network. But even without any measurement by a pressure sensor, the utility provider may have information about an initiated change of a target pressure as a set input parameter for operating pumps and/or valves in the pipe network. Alternatively, or in addition, the input pressure may be estimated based on pump operation. So, the input pressure information may be any set, estimated, and/or measured value of an input pressure that the pipe network is supplied with. It also does not matter for which position(s) in the pipe network the input pressure information is actually valid. The input pressure information simply allows to determine an absolute change of an input pressure value between two time-windows.

The input pressure information may include timing information that allows to determine a difference between the input pressure in at least one first considered time-window and the input pressure in at least one second considered time-window. Such timing information may be the time of the day, a date, a calendar week or month of the year, and/or a time stamp. The timing information may be coarse, such as a month of the year or a calendar week, or may be accurate to the hour, minute or second. The input pressure information may include measured, set or estimated absolute fluid pressure values being associated with the timing information or may include a measured, set or estimated absolute change of fluid pressure being associated with the timing information. The at least one first considered time-window and the at least one second considered time-window can be arbitrarily defined and selected. A criterion for selecting which time-windows to consider as the first time-window(s) may be whether the input pressure difference between the time-windows is suitable, i.e., not too small and not too large.

For example, the first considered time-window could be a calendar week and the second considered time-window could be another calendar week. Another example could be that the first considered time-windows are the morning hours 06.00-08:00hrs of all working days of a calendar month, and the second considered time-windows are the afternoon hours 14.00-16:00hrs of the same working days of the same calendar month.

The inventive idea makes further use of the fact that consumers typically have a characteristic "consumption signature", e.g., repetitive fluid flow events and/or fluid volume consumption events. For example, flushing the toilet always triggers a fluid flow for a certain time period until the water reservoir of the toilet is refilled again. The filling of the water reservoir of the toilet is thereby a characteristic fluid volume consumption event, e.g., of 6.5 litres. Another example is that a dishwasher or a washing machine is typically used in the same operating modes with the same water consumption. Alternatively, or in addition, part of the consumption signature may be the fluid flow during maximum flow events when a maximum number of consumers are simultaneously consuming fluid.

An "event" in the present context of a fluid flow event or fluid volume consumption event shall mean herein a consumption of fluid at a certain fluid flow over a certain time. The beginning of an "event" may be defined by an opening or closing of a consumer valve, faucet or tap. The end of a an "event" may similarly be defined by a subsequent closing or opening of a valve. The end of an event may be the beginning of the subsequent event. Optionally, periods of gradually rising or falling fluid flow between events may be discarded as non-events. An event may be parametrised by the fluid flow, its duration and its time stamp, i.e., date and time of the day the event occurred. The product of the fluid flow during the event and the duration of the event gives the fluid volume consumption during an event, which characterises the fluid volume consumption event.

The idea is now to use the fluid flow meters that are installed at each consumer household for aggregating statistical data of a plurality of such fluid flow events and/or fluid volume consumption events. The statistical data could look like the following table, in which each row represents an event:

| start of event | end of event | fluid flow [litres/hour] |
|---|---|---|
| 20/05/2022 06:32 | 20/05/2022 06:34 | 195.3 |
| 20/05/2022 06:45 | 20/05/2022 06:47 | 194.8 |
| 20/05/2022 06:56 | 20/05/2022 07:08 | 155.7 |
| ... | ... | ... |

The first two events could be the refilling of the toilet reservoir after flushing the toilet. The third event may be using the shower. If a faucet, for example in the kitchen, is opened during an event, the fluid flow measured by the fluid flow meter rises. This may be ignored as a short consumption spike or it may stop the event and start a new event to be logged. However, events during which more than one consumer unit consumes fluid may be statistically less distinct, i.e., more difficult to identify, compared to events during which a single consumer unit consumes fluid.

If there is no change in the input pressure, the statistical data is assumed also not to change. If, however, the input pressure changes, such a change should show in the statistical data. Therefore, the head-end-system collects the aggregated statistical data from the fluid flow meter(s) and timely associates it with the available input pressure information it has access to. If the head-end-system selects suitable time-windows to be considered as the first time-window(s) and the second time-window(s), between which the input pressure has changed, it is able to determine the fluid pressure at the fluid flow meter. For instance, the statistical data may show a shift in the consumption signature towards lower flows if the input pressure has dropped, and towards higher flows if the input pressure has risen.

For example, the fluid pressure p at the fluid flow meter may be determined as p = Δp·Q₂²/(Q₂² - Q₁²) if the input pressure changed by Δp = p - p₁, wherein p₁ is the input pressure during the first time-window. This input pressure change caused a change in the aggregated statistical data showing a shift from one characteristic fluid flow Q₁ during the first time-window to another characteristic fluid flow Q₂ during the second time-window. The determined fluid pressure p at the fluid flow meter is the fluid pressure during the second considered time-window. The "historic" fluid pressure during the first time-window differs from the determined fluid pressure p by the known input pressure change Δp. For the determined fluid pressure p to be as "up-to-date" as possible, the latest possible time-window(s) should be considered as the second time-window(s). The choice of which first time-window(s) to consider is in principle arbitrary and should not affect the result if the pipe network as such has not changed. However, a smart choice of first time-window(s) to consider may reduce the error on the determined fluid pressure p.

It should be noted that the determined fluid pressure p at the fluid flow meter may be a gauge pressure relative to the ambient atmospheric pressure p₀, i.e., *p*₀ := 0. If a known ambient atmospheric pressure p₀ is taken into account, the fluid pressure p may be determined as absolute pressure by p = p₀ + Δp·Q₂²/(Q₂² - Q₁²).

Optionally, the change of the aggregated statistical data is a shift of one or more characteristic fluid flow peaks and/or fluid volume consumption peaks in an event histogram from the at least one first considered time-window to the at least one second considered time-window. So, the statistical data may be an event histogram counting fluid flow events and/or fluid consumption events. In order to reduce the amount of data to be transmitted to the head-end-system, the statistical data may be aggregated by condensing it to information about peak positions in the event histogram. A further data compression could be done by the means of fitting curves, principal component analysis or other techniques that enable finding the most significant features of the statistical data.

For example, the first considered time-window may be calendar week 32, in which 50 toilet flushing events show as a peak at the histogram bin of 6-7 litres fluid consumption and a flow of 195 litres per hour. The second considered time-window may be calendar week 35, during which we know that the pipe network was supplied with a lower input pressure compared to calendar week 32. The 53 toilet flushing events in calendar week 35 still show as a peak at the histogram bin of 6-7 litres fluid consumption, but now at a lower flow of 170 litres per hour. If the pressure drop between the considered time-windows is known, the fluid pressure at the fluid flow meter can be determined from the peak shift by 25 litres per hour. In the above example, given that the input pressure has changed by -0.4 bar and a characteristic histogram peak has shifted from 195 to 170 litres per hour, the fluid pressure p at the fluid flow meter can be determined as: p = -0.4 bar ·170²/(170²- 195²) = 1.27 bar (above atmospheric pressure). During the first considered time-window, the fluid pressure at the fluid flow meter was 1.67 bar (above atmospheric pressure).

The aggregated statistical data is more reliable if it contains (redundant) information about more than one characteristic peak in the event histogram, because it is expected that all characteristic peaks shift by the same amount if they are caused by a change in input pressure. So, if two or more characteristic peaks are shifted between the considered time-windows, there is a high likelihood that the timewise association with the change of input pressure is correct.

Optionally, the step of aggregating statistical data may be performed during the same time-windows by a plurality of fluid flow meters being installed in the pipe network. As a change in the input pressure should show as a similar shift of flow in the characteristic consumption signature of all consumers in the pipe network, in particular neighbouring consumers, the statistical data from several fluid flow meters aggregated during the same time-windows is preferably processed by the head-end-system to gain further trust in the timewise association of the change in the aggerated statistical data with the change in the input pressure, because the change in the aggerated statistical data should be the same or similar for all or most of the fluid flow meters in the pipe network if it is caused by a change of the input pressure.

Optionally, the fluid flow meter may be a battery-powered ultrasonic flow meter and the aggregated statistical data may be provided by wirelessly transferring the data to the head-end system. Such fluid flow meters have the advantage that digital information about fluid flow and/or fluid consumption can be easily automatically collected from many fluid flow meters in the pipe network on a regular basis and/or on demand. This functionality may be predominantly used for billing purposes. However, the aggregated statistical data may be added to the data that is usually transferred to the head-end-system for billing purposes to allow the further inventive functionality of determining the fluid pressure at the fluid flow meter. Alternatively, or in addition, the aggregated statistical data may be wirelessly transferred to the head-end system by dedicated data submissions.

Optionally, the step of aggregating the statistical data may comprise identifying repetitive characteristic fluid flow events caused by one or more consumer units that have a constant characteristic fluid flow profile and/or a constant characteristic fluid volume consumption profile and/or a constant characteristic hydraulic resistance profile. As explained above, a toilet flushing may start an event with a characteristic fluid volume consumption profile. A shower event may have a characteristic fluid flow profile, but varying fluid volume consumption. A repetitive event of opening a valve to a certain degree has a characteristic hydraulic resistance profile.

Optionally, the step of aggregating the statistical data may comprise identifying maximum fluid flow events. Such maximum fluid flow events may be caused by a large or maximum number of consumer units simultaneously consuming fluid, e.g., many or all faucets of a household are open at the same time. It can be assumed that the flow of such maximum fluid flow events is constant as long as the input pressure is constant. Vice versa, the flow of maximum fluid flow events can be expected to change if the input pressure changes.

Optionally, the at least one first considered time-window and the at least one second considered time-window may be selected to be time-windows in which the input pressures typically differ. For example, the input pressure is typically lower during hours of high demand. For example, the input pressure is expected to be lower in the morning hours of 06:00hrs to 08:00hrs (high demand) compared to the afternoon hours of 14:00hrs to 08:00hrs (low demand). Thus, the first considered time-windows may be, for example, the morning hours 06.00-08:00hrs of all working days of a calendar month, and the second considered time-windows may be the afternoon hours 14.00-16:00hrs of the same working days of the same calendar month.

It is preferred to check the determination of the fluid pressure by considering different suitable first time-window(s), if available, in order to cross-check the determined fluid pressure. The determined fluid pressure should theoretically be independent of which second time-window(s) is considered. However, the error on the respective determined fluid pressure may depend on which first time-windows are considered. Generally, the more aggregated statistical data for different time-windows is available, the more precisely the fluid pressure can be determined by selecting the most suitable time-windows to consider. The considered time-windows may preferably be selected to minimise the error on the respective determined fluid pressure.

Optionally, the step of aggregating the statistical data may comprise identifying characteristic fluid flow events by filtering associated characteristic fluid volume consumption events. For example, the event histogram may have two-dimensional bins defined by a binning in flow and a binning in volume consumption. The signal-to-noise ratio in the flow histogram may be significantly increased by selecting specific peaking bins in the volume consumption histogram. This may filter out efficiently less distinct events of simultaneous consumption by multiple consumer units.

Optionally, the step of aggregating the statistical data may comprise reducing the amount of data to parameters being indicative of characteristic fluid flow events and/or characteristic fluid volume consumption events. This is particularly beneficial to save battery power and uplink budget of the fluid flow meter. The wireless transmission from the fluid flow meter to the head-end-system should be as efficient as possible. So, it is beneficial if the aggregation of the statistical data includes a synthesis to the essence of the statistical data. The aggregated statistical data after such synthesis may be one or more peak positions in a fluid flow histogram during a rolling time-window, e.g., during the morning hours 06:00-08:00 of the last 7 days, submitted daily. The amount of aggregated statistical data to be transmitted to the head-end-system would thereby be heavily reduced. In addition, the complete histogram data may be transferred for offline data analysis to the head-end-system much less frequently, e.g., once a week or once a month.

Optionally, the input pressure information may further allow to determine a relative change of the input pressure between the first considered time-window and the second considered time-window. The fluid pressure at the fluid flow meter may only be determined by the head-end system under the condition that the relative change of input pressure is in the range of 10% to 25%, in particular in case the change of input pressure is initiated for this purpose. This range is particularly beneficial, because it strikes a balance between the desire to see a significant change in the aggregated statistical data and the desire to avoid a bad user experience of too low or too high pressure. A user may not even realise a relative change of input pressure in the range of 10% to 25%.

Optionally, there is a time distance between the at least one first considered time-window and the at least one second considered time-window, wherein the input pressure has or was changed gradually and/or stepwise in the time distance between the at least one first considered time-window and the at least one second considered time-window. Such a "soft" change of input pressure has, in particular in case the change of input pressure is initiated for this purpose, the advantage that a bad user experience of a sudden change of the input pressure is avoided.

According to a second aspect of the present invention, a system is provided for determining a fluid pressure at a fluid flow meter being installed in a pipe network that is supplied with fluid at a varying and/or variable input pressure, wherein the system comprises:
- a head-end system having access to input pressure information, wherein the input pressure information allows to determine a difference between the input pressure in a first considered time-window and the input pressure in a second considered time-window;
- at least one fluid flow meter being configured to aggregate, at least during the at least one first considered time-window and during the at least one second considered time-window, statistical data of a plurality of fluid flow events and/or fluid volume consumption events and to provide the aggregated data in regular intervals and/or on demand to the head-end system,
wherein the head-end system is configured to determine a fluid pressure at the fluid flow meter based on:
- a change in the aggregated statistical data between the at least one first considered time-window and the at least one second considered time-window, and
- the difference between the input pressure in the at least one first considered time-window and the input pressure in the at least one second considered time-window.

Preferably, the system may be configured to carry out the method as described above.

The method disclosed herein may be implemented in form of compiled or uncompiled software code that is stored on a computer readable medium with instructions for executing the method. Alternatively, or in addition, the method may be executed by software in a cloud-based system and/or an automatic meter reading (AMR) system and/or advanced meter infrastructure (AMI) system.

An alternative independent method may use the fluid flow meter itself for the step of determining the fluid pressure at said fluid flow meter. The fluid flow meter is installed in a pipe network that is supplied with fluid at a varying and/or variable input pressure, and it is in addition equipped with a bi-directional means of communication. The alternative method comprises the following steps:
- aggregating, in the fluid flow meter, during at least one first considered time-window and during at least one second considered time window, statistical data of a plurality of fluid flow events and/or fluid volume consumption events;
- receiving, by the fluid flow meter, input pressure information, wherein the input pressure information allows to determine a difference between the input pressure in the at least one first considered time-window and the input pressure in the at least one second considered time-window;
- determining, by the fluid flow meter, a fluid pressure at said flow meter based on:
   - a change in the aggregated statistical data between the at least one first considered time-window and the at least one second considered time-window, and
   - the difference between the input pressure in the at least one first considered time-window and the input pressure in the at least one second considered time-window.

### SUMMARY OF THE DRAWINGS

Embodiments of the present disclosure will now be described by way of example with reference to the following figures of which:
Fig. 1 shows schematically an example of a pipe network supplying a plurality of consumer households with water;
Fig. 2 shows an example of a typical diagram of flow measured by a fluid flow meter over time;
Fig. 3 shows a typical characteristic fluid flow event as measured by a fluid flow meter over time;
Fig. 4 shows a high-resolution event histogram of counted fluid flow events with a bin size of 1 litre per hour;
Fig. 5 shows the events of Fig. 4 in a low-resolution event histogram by applying a bin size of 25 litres per hour;
Fig. 6 shows the events of Fig. 4 positioned in a two-dimensional plot according to flow and the time duration of the events, wherein a filtering of characteristic fluid volume consumption events is displayed;
Fig. 7 shows the filtered events of Fig. 6 in an event histogram with a bin size of 5 litres per hour;
Figs. 8a,b show event histograms of counted fluid flow events with a bin size of 10 litres per hour, wherein Fig. 8a shows the events occurred during in the first considered time-window and Fig. 8b shows the events occurred during the second considered time-window;
Fig. 9 shows an event histogram of counted fluid flow events with a bin size in flow of 10 litres per hour, wherein the events occurred during in the first considered time-window (light columns) and during the second considered time-window (dark columns);
Fig. 10 shows event distributions in a two-dimensional plot according to flow and time duration of the events;
Fig. 11 shows another event distribution in a two-dimensional plot according to ultrasonic phase shift and volume consumption per event;
Fig. 12 shows event distributions in a two-dimensional plot according to flow and time duration of the events, wherein the events occurred during in the first considered time-window (shown as x-marks) and during the second considered time-window (shown as circular marks); and
Fig. 13 shows a diagram of the maximum fluid flow detected per day displayed over the days of the year.

### DETAILED DESCRIPTION

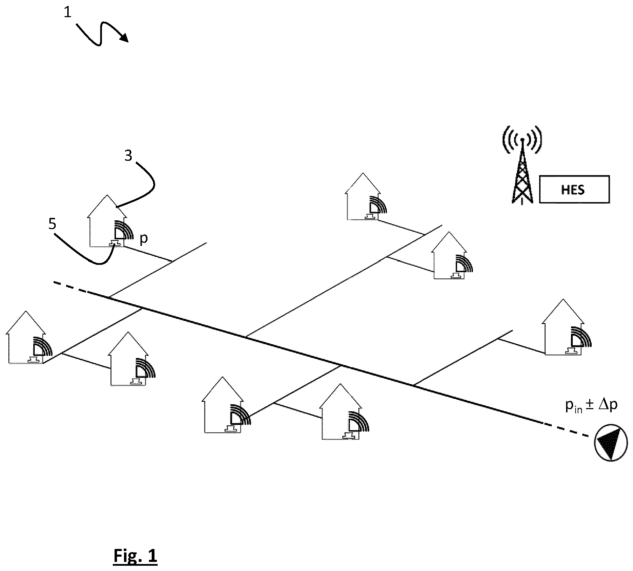

Fig. 1 shows a pipe network 1 of a water supply system for supplying a plurality of consumer households 3 with a fluid, e.g., water or gas. An operator of the pipe network 1, for example a utility provider, supplies the pipe network 1 with the fluid at a varying and/or variable input pressure pᵢₙ. The input pressure pᵢₙ may vary due to a dynamic behaviour of the water supply system or the input pressure pᵢₙ may be varied on purpose by the utility provider. In any case, the utility provider has information about the input pressure pᵢₙ that allows to determine the time and amount Δp of any change of input pressure pᵢₙ.

Each consumer household 3 is equipped with a fluid flow meter 5 for determining the fluid volume consumption of each household and to communicate wirelessly consumption values to a head-end system HES for billing purposes. The idea is now to determine a fluid pressure at each consumer household 3 by use of the fluid flow meter 5 installed at the consumer household 3. Thereby, it is possible to give a utility provider information about the fluid pressure at each consumer household 3 without installing additional pressure sensors for measuring the fluid pressure.

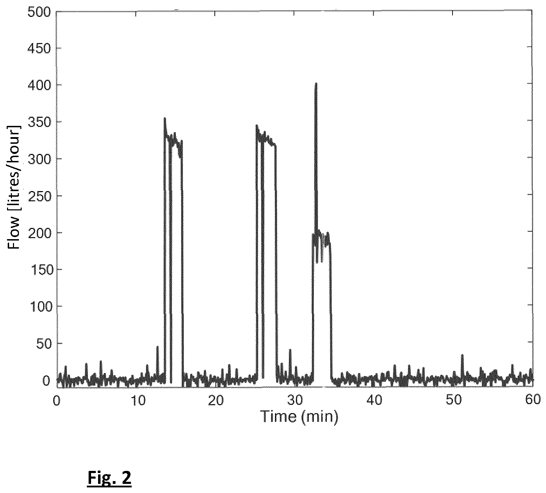

Fig. 2 shows what a fluid flow meter 5 may typically measure during an hour of the day. There are longer periods of zero fluid consumption during which there is essentially zero or negligible fluid flow measured. There are, however, three distinct consumption events clearly visible. The first two consumption events are caused by a washing machine drawing a fluid flow of 320 litres per hour for about two minutes. The third consumption event was caused by a toilet use triggering a fluid flow of 195 litres per hour for about two minutes. The washing machine and the toilet are typical consumer units that have a characteristic "consumption signature" or "consumption fingerprint". This means that the associated fluid flow events and/or fluid volume consumption events are repetitive and expected to occur quite often over a period of days, weeks and/or months.

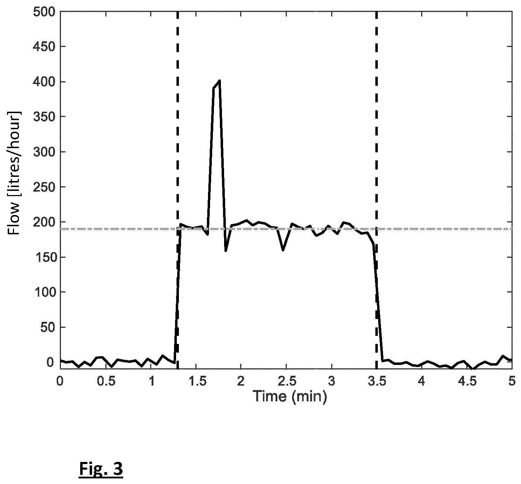

Fig. 3 shows in more detail the toilet use tiggering a fluid flow event of 195 litres per hour. The additional spike due to shortly washing hands while the toilet reservoir is refilling, can be ignored. The beginning of the event may be triggered by the steep rise in flow from zero to 195 litres per hour, whereas the end of the event may be indicated by the steep fall from 195 litres per hour to zero flow. The fluid flow event of 195 litres per hour may be an average flow during the event, wherein short spikes of overlaying additional consumption may be ignored.

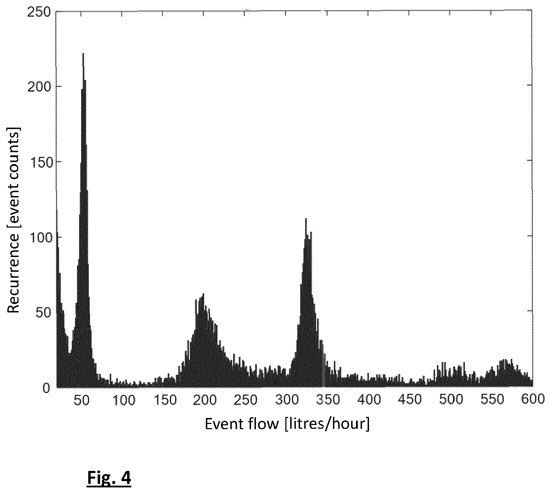

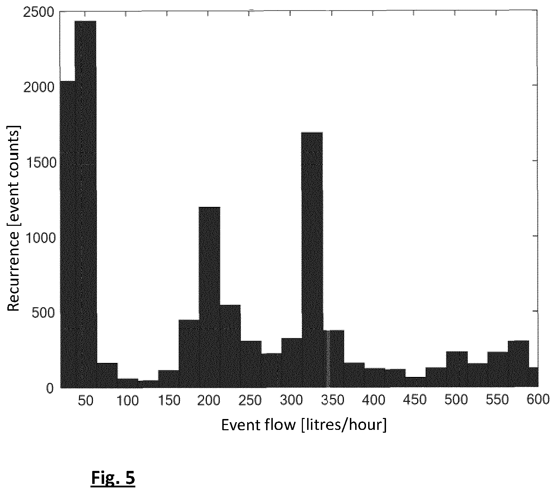

Fig. 4 shows an event histogram in which the fluid flow events are counted per histogram bin, wherein the histogram bin size is one litre per hour. The events in Fig. 4 were counted over a period of several months with a stable input pressure pᵢₙ. As can be seen, there are three distinct characteristic peaks in the histogram at 50 litres per hour, 200 litres per hour and 325 litres per hour. The flow meters 5 may be able to collect the data shown in Fig. 4 and to transmit wirelessly the histogram to the head-end system HES. However, the high-resolution histogram of Fig. 4 contains a lot of data and the transmission would cause substantial battery power and uplink budget. In order to reduce the amount of data to be transmitted, the histogram could have a coarser binning as shown in Fig. 5 which shows a histogram with a histogram bin size of 25 litres per hour filled with the same events as shown in Fig. 4. The three peak positions are still clearly visible and the amount of data is heavily reduced compared to the high-resolution histogram of Fig. 4.

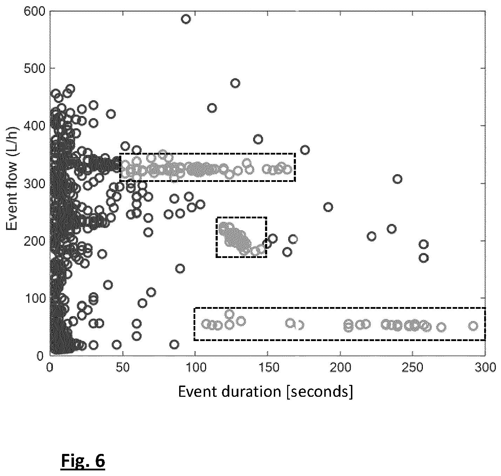

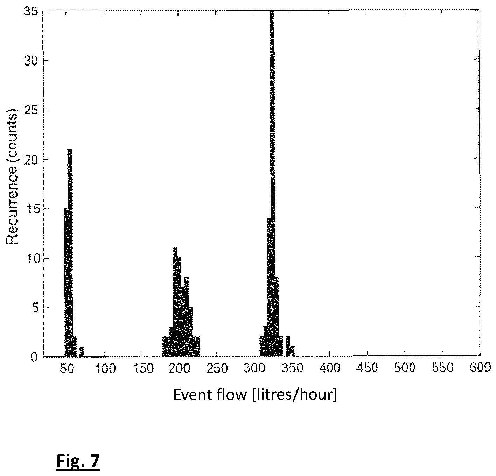

Alternatively, or in addition, the amount of data to be transmitted can be reduced by applying a data filter to select only the most characteristic fluid flow events as shown in Fig. 6 which shows the events of Figs. 4 and 5 positioned in a two-dimensional plot according to the event flow and the time duration of the event. If only the events within the dashed rectangles are selected, the amount of data to be transmitted can be heavily reduced. Furthermore, the signal-to-noise ratio in the remaining histogram can be significantly increased. The remaining histogram after the filtering is shown in Fig. 7 showing clear peaks at 50 litres per hour, 200 litres per hour and 325 litres per hour and almost no background noise.

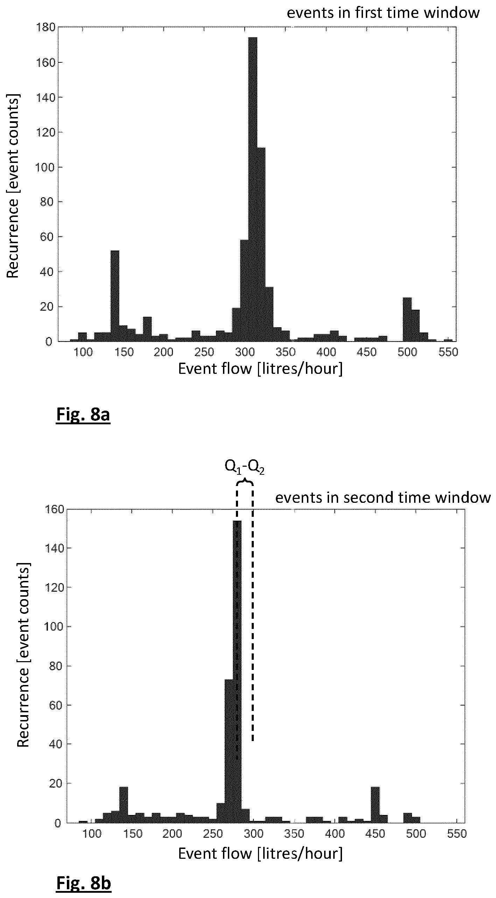

Figs. 8a,b show the effect that a change Δp in the input pressure pᵢₙ has on the positions of the characteristic fluid flow events in the event histograms. Fig. 8a shows the events in a first considered time-window during which the input pressure pᵢₙ was stable. Fig. 8b shows the events in a second considered time-window during which the input pressure pᵢₙ is smaller than during the first considered time-window. As can be seen, the central peak around 305 litres per hour shifted down to 275 litres per hour. The utility provider knows the difference Δp between the input pressure pᵢₙ during the first considered time-window and the input pressure pᵢₙ during the second considered time-window. The considered time-windows may be selected accordingly. It follows that the fluid pressure at the fluid flow meter 5 which aggregated the statistical data according to Figs. 8a,b, can be determined based on the peak shift from 305 litres per hour to 275 litres per hour. For example, if the pressure change between the first considered time-window and the second considered time-window was -0.5 bar, the fluid pressure at the fluid flow meter 5 is 2.17 bar during the second time-window. During the first considered time-window, the fluid pressure at the fluid flow meter 5 was 2.67 bar.

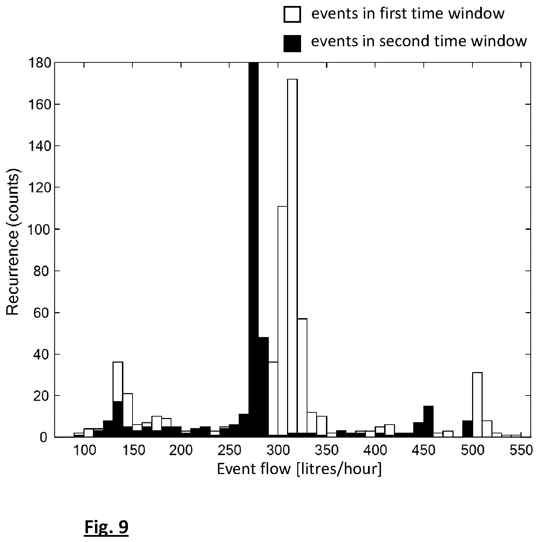

Fig. 9 shows a similar situation with events from the first considered time-window and events from the second considered time-window in the same histogram, wherein the events of the first considered time-window are displayed as white columns and the events in the second considered time-window are displayed as black columns.

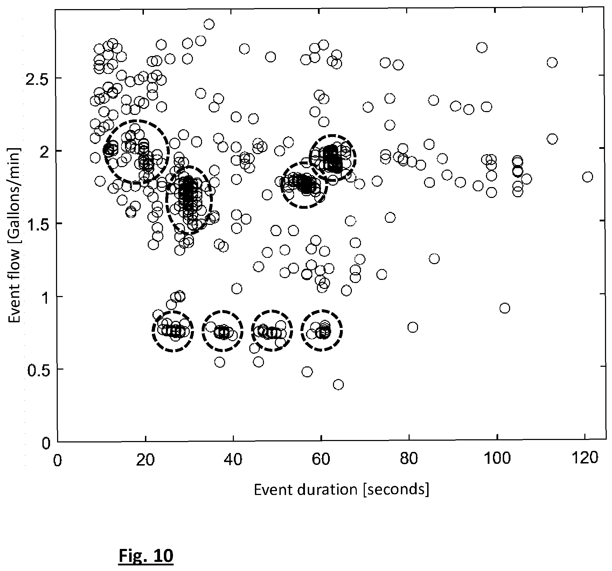

Fig. 10 shows another event distribution in a two-dimensional plot according to the event flow and the event duration. The event flow is here measured in gallons per minute (GPM). Distinct areas of high event density may be filtered to reduce the amount of aggregated statistical data to be sent to the head-end system HES. As explained before, such filtering also improves the signal-to-noise ratio for identifying characteristic peaks in the event histograms.

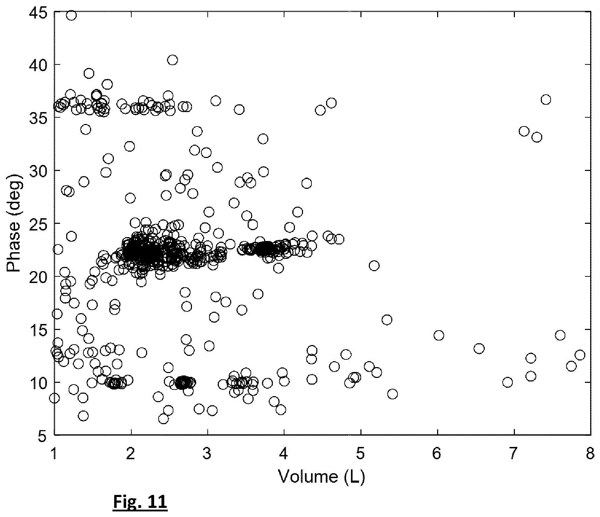

Fig. 11 shows another event distribution in a two-dimensional plot according to ultrasonic phase shift and volume consumption. In the example of Fig. 11, the fluid flow meter 5 is an ultrasonic flow meter that determines the fluid flow from a phase shift between ultrasonic waves travelling in the direction of fluid flow and against the direction of fluid flow. The ultrasonic phase shift is strongly correlated with the fluid flow, so that the fluid flow meter can use the phase shift as a measure for the fluid flow. The fluid volume consumption as displayed on the x-axis of Fig. 11 is determined as a product of the event flow and the event duration. As explained before, regions of high event density can be filtered to determine the peak positions in the histograms as accurately as possible.

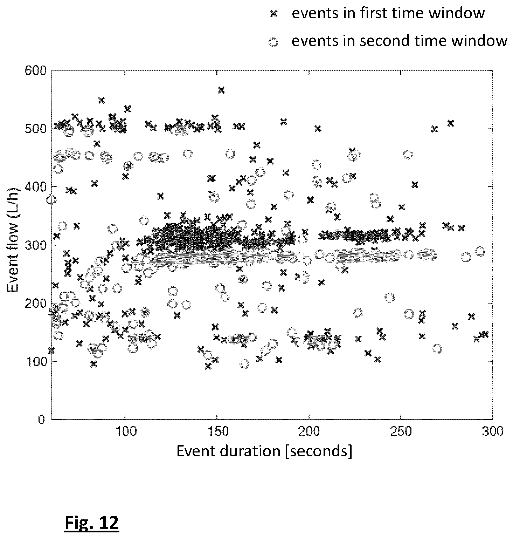

Fig. 12 shows the events in the first considered time-window and events in the second considered time-window in the same two-dimensional plot according to event flow and event duration. The events in the first considered time-window are shown as x-marks and the events in the second considered time-window are shown as circles. As the input pressure pᵢₙ has dropped between the first considered time-window and the second considered time-window, the events in the second considered time-window are shifted to lower event flows, which shows as a shift of the characteristic peaks in the event flow histograms.

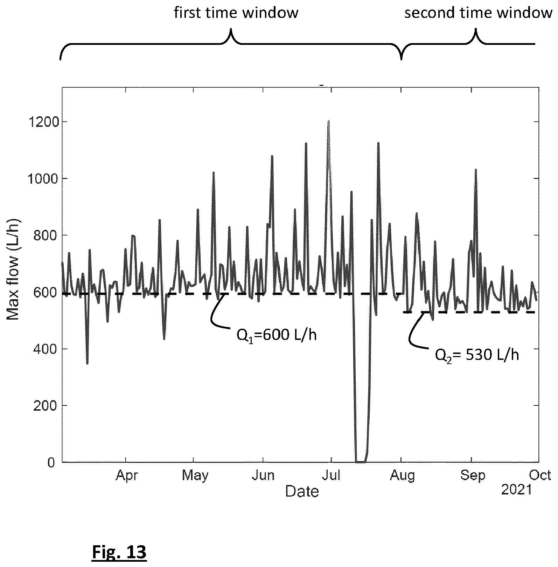

Fig. 13 shows a different way to determine the fluid pressure at the fluid flow meter 5. Fig. 13 shows the maximum flow of the day recorded by the fluid flow meter 5 over the year. In the time of April to July, the maximum flow has a relatively stable base line at 600 litres per hour despite quite high fluctuations of the maximum flow. In mid-July, there is a holiday period of zero water consumption. As can be seen in Fig. 13, the maximum flow base line has dropped at the beginning of August to about 530 litres per hour. The reason for this drop of the maximum flow baseline is a drop of the input pressure pᵢₙ by Δp. The fluid pressure p at the respective fluid flow meter 5 can then be determined based on the drop of the maximum flow baseline. For example, if the pressure change was known to be -0.5 bar, the fluid pressure p at the fluid flow meter 5 can be determined to be p=-0.5 bar·530²/(530² -600²)=1,78 bar during the second time-window. As the statistical uncertainties with the maximum flow base line are higher compared to determining the position of characteristic peaks in the event histograms, the method according to Fig. 13 is less preferred.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the scope of the disclosure, which should be determined from the appended claims.

### List of reference numerals:

- 1: pipe network
- 3: consumer household
- 5: fluid flow meter
- HES: head-end system
- Q₁: fluid flow in the first considered time-window
- Q₂: fluid flow in the second considered time-window
- p: fluid pressure at the fluid flow meter
- pᵢₙ: input pressure

## Claims

1. A method for determining a fluid pressure (p) at a fluid flow meter (5) being installed in a pipe network (1) that is supplied with fluid at a varying and/or variable input pressure (pᵢₙ), wherein the method comprises the following steps:
- recording input pressure information, wherein the input pressure information allows to determine a difference (Δp) between the input pressure (pᵢₙ) in at least one first considered time-window and the input pressure (pᵢₙ) in at least one second considered time-window;
- aggregating, in the fluid flow meter (5), at least during the at least one first considered time-window and during the at least one second considered time-window, statistical data of a plurality of fluid flow events and/or fluid volume consumption events;
- providing the aggregated statistical data in regular intervals and/or on demand to a head-end system (HES) that has access to the input pressure information; and
- determining, by the head-end system (HES), a fluid pressure (p) at the fluid flow meter (5) based on:
- a change in the aggregated statistical data between the at least one first considered time-window and the at least one second considered time-window, and
- the difference (Δp) between the input pressure (pᵢₙ) in the at least one first considered time-window and the input pressure (pᵢₙ) in the at least one second considered time-window.

2. The method of claim 1, wherein the change of the aggregated statistical data is a shift of one or more characteristic fluid flow peaks and/or fluid volume consumption peaks in an event histogram from the at least one first considered time-window to the at least one second considered time-window.

3. The method of claim 1 or 2, further comprising initiating a known change (Δp) of the input pressure (pᵢₙ) between the at least one first considered time-window and the at least one second considered time-window.

4. The method of any of the preceding claims, wherein aggregating the statistical data is performed during the same time-windows by a plurality of fluid flow meters (5) being installed in the pipe network (1).

5. The method of any of the preceding claims, wherein the fluid flow meter (5) is a battery-powered ultrasonic flow meter and the aggregated statistical data is provided by wirelessly transferring the data to the head-end system (HES).

6. The method of any of the preceding claims, wherein the step of aggregating the statistical data comprises identifying repetitive characteristic fluid flow events caused by one or more consumer units that have a constant characteristic fluid flow profile and/or a constant characteristic fluid volume consumption profile and/or a constant characteristic hydraulic resistance profile.

7. The method of any of the preceding claims, wherein the step of aggregating the statistical data comprises identifying maximum fluid flow events.

8. The method of any of the preceding claims, wherein
the fluid pressure p is determined as p = Δp·Q₂²/(Q₁² - Q₂²) if the input pressure (pᵢₙ) has changed by Δp = p - p₁, wherein p₁ is the input pressure (pᵢₙ) during the first time-window, and wherein the aggregated statistical data shows a shift from one characteristic fluid flow Q₁ during the first time-window to another characteristic fluid flow Q₂ during the second time-window.

9. The method of any of the preceding claims, wherein the at least one first considered time-window and the at least one second considered time-window are selected to be time-windows between which the input pressure (pᵢₙ) typically differs.

10. The method of any of the preceding claims, wherein the step of aggregating the statistical data comprises identifying characteristic fluid flow events by filtering associated characteristic fluid volume consumption events.

11. The method of any of the preceding claims, wherein the step of aggregating the statistical data comprises reducing the amount of data to parameters being indicative of characteristic fluid flow events and/or characteristic fluid volume consumption events.

12. The method of any of the preceding claims, wherein the input pressure information further allows to determine a relative change (Δp/pᵢₙ) of the input pressure (pᵢₙ) between the at least one first considered time-window and the at least one second considered time-window, wherein the fluid pressure (p) at the fluid flow meter (5) is only determined by the head-end system (HES) if the relative change (Δp/pᵢₙ) of input pressure (pᵢₙ) is in the range of 10% to 25%.

13. The method of any of the preceding claims, wherein there is time distance between the at least one first considered time-window and the at least one second considered time-window, wherein the input pressure (pᵢₙ) has or was changed gradually and/or stepwise in the time distance between the first considered time-window and the second considered time-window.

14. A system for determining a fluid pressure (p) at a fluid flow meter (5) being installed in a pipe network (1) that is supplied with fluid at a varying and/or variable input pressure (pᵢₙ), wherein the system comprises:
- a head-end system (HES) having access to input pressure information, wherein the input pressure information allows to determine a difference (Δp) between the input pressure (pᵢₙ) in at least one first considered time-window and the input pressure (pᵢₙ) in at least one second considered time-window;
- at least one fluid flow meter (5) being configured to aggregate, at least during the at least one first considered time-window and during the at least one second considered time-window, statistical data of a plurality of fluid flow events and/or fluid volume consumption events time-window and to provide the aggregated data in regular intervals and/or on demand to the head-end system (HES),
wherein the head-end system (HES) is configured to determine a fluid pressure (p) at the fluid flow meter (5) based on
- a change in the aggregated statistical data between the at least one first considered time-window and the at least one second considered time-window, and
- the difference (Δp) between the input pressure (pᵢₙ) in the at least one first considered time-window and the input pressure (pᵢₙ) in the at least one second considered time-window.

15. The system of claim 14, wherein the system is configured to carry out the method of any of the claims 1 to 13.

## Patentansprüche

1. Verfahren zum Bestimmen eines Fluiddrucks (p) an einem Fluiddurchflussmesser (5), der in einem Rohrleitungsnetz (1), das mit einem Fluid bei einem sich verändernden und/oder variablen Eingangsdruck (pᵢₙ) versorgt wird, installiert ist, wobei das Verfahren die folgenden Schritte umfasst:
- Aufzeichnen von Eingangsdruckinformationen, wobei die Eingangsdruckinformationen gestatten, einen Unterschied (Δp) zwischen dem Eingangsdruck (pᵢₙ) in wenigstens einem ersten betrachteten Zeitfenster und dem Eingangsdruck (pᵢₙ) in wenigstens einem zweiten betrachteten Zeitfenster zu bestimmen;
- Ansammeln von statistischen Daten von mehreren Fluiddurchflussereignissen und/oder Fluidvolumenverbrauchsereignissen wenigstens während des wenigstens einen ersten betrachteten Zeitfensters und während des wenigstens einen zweiten betrachteten Zeitfensters in dem Fluiddurchflussmesser (5);
- Liefern der angesammelten statistischen Daten in regelmäßigen Abständen und/oder auf Abruf an ein Head-End-System (HES), das über einen Zugriff auf die Eingangsdruckinformationen verfügt; und
- Bestimmen eines Fluiddrucks (p) an dem Fluiddurchflussmesser (5) durch das Head-End-System (HES) auf der Grundlage
- einer Veränderung in den angesammelten statistischen Daten zwischen dem wenigstens einen ersten betrachteten Zeitfenster und dem wenigstens einen zweiten betrachteten Zeitfenster, und
- des Unterschieds (Δp) zwischen dem Eingangsdruck (pᵢₙ) in dem wenigstes einen ersten betrachteten Zeitfenster und dem Eingangsdruck (pᵢₙ) in dem wenigstens einen zweiten betrachteten Zeitfenster.

2. Verfahren nach Anspruch 1, wobei die Veränderung der angesammelten statistischen Daten eine Verschiebung einer oder mehrerer charakteristischer Fluiddurchflussspitzen und/oder Fluidvolumenverbrauchsspitzen in einem Ereignishistogramm von dem wenigstens einen ersten betrachteten Zeitfenster zu dem wenigstens einen zweiten betrachteten Zeitfenster ist.

3. Verfahren nach Anspruch 1 oder 2, ferner umfassend das Initiieren einer bekannten Veränderung (Δp) des Eingangsdrucks (pᵢₙ) zwischen dem wenigstens einen ersten betrachteten Zeitfenster und dem wenigstens einen zweiten betrachteten Zeitfenster.

4. Verfahren nach einem der vorhergehenden Ansprüche, wobei das Ansammeln der statistischen Daten während der gleichen Zeitfenster durch mehrere Fluiddurchflussmesser (5), die in dem Rohrleitungsnetz (1) installiert sind, durchgeführt wird.

5. Verfahren nach einem der vorhergehenden Ansprüche, wobei der Fluiddurchflussmesser (5) ein batteriebetriebener Ultraschall-Durchflussmesser ist, und die angesammelten statistischen Daten durch drahtloses Übertragen der Daten zu dem Head-End-System (HES) geliefert werden.

6. Verfahren nach einem der vorhergehenden Ansprüche, wobei der Schritt des Ansammelns der statistischen Daten das Identifizieren von sich wiederholenden charakteristischen Fluiddurchflussereignissen, die durch einen oder mehrere Verbrauchereinheiten mit einem konstanten charakteristischen Fluiddurchflussprofil und/oder einem konstanten charakteristischen Fluidvolumenverbrauchsprofil und/oder einem konstanten charakteristischen hydraulischen Widerstandsprofil verursacht werden, umfasst.

7. Verfahren nach einem der vorhergehenden Ansprüche, wobei der Schritt des Ansammelns der statistischen Daten das Identifizieren von Ereignissen mit maximalem Fluiddurchfluss umfasst.

8. Verfahren nach einem der vorhergehenden Ansprüche, wobei der Fluiddruck p als p = Δp·Q₂²/(Q₁² - Q₂²) bestimmt wird, wenn sich der Eingangsdruck (pᵢₙ)um Δp = p - p₁, verändert hat, wobei p₁ der Eingangsdruck (pᵢₙ) während des ersten Zeitfensters ist, und wobei die angesammelten statistischen Daten eine Verschiebung von einem charakteristischen Fluiddurchfluss Q₁ während des ersten Zeitfensters zu einem anderen charakteristische Fluiddurchfluss Q₂ während des zweiten Zeitfensters zeigen.

9. Verfahren nach einem der vorhergehenden Ansprüche, wobei das wenigstens eine erste betrachtete Zeitfenster und das wenigstens eine zweite betrachtete Zeitfenster so gewählt werden, dass sie Zeitfenster sind, zwischen denen sich der Eingangsdruck (pᵢₙ) typischerweise unterscheidet.

10. Verfahren nach einem der vorhergehenden Ansprüche, wobei der Schritt des Ansammelns der statistischen Daten das Identifizieren von charakteristischen Fluiddurchflussereignissen durch Filtern zugehöriger charakteristischer Fluidvolumenverbrauchsereignisse umfasst.

11. Verfahren nach einem der vorhergehenden Ansprüche, wobei der Schritt des Ansammelns der statistischen Daten das Verringern der Menge an Daten auf Parameter, die charakteristische Fluiddurchflussereignisse und/oder charakteristische Fluidvolumenverbrauchsereignisse anzeigen, umfasst.

12. Verfahren nach einem der vorhergehenden Ansprüche, wobei die Eingangsdruckinformationen ferner gestatten, eine relative Veränderung (Δp/pᵢₙ) des Eingangsdrucks (pᵢₙ) zwischen dem wenigstens einen ersten betrachteten Zeitfenster und dem wenigstens einen zweiten betrachteten Zeitfenster zu bestimmen, wobei der Fluiddruck (p) an dem Fluiddurchflussmesser (5) nur durch das Head-End-System (HES) bestimmt wird, wenn die relative Veränderung (Δp/pᵢₙ) des Eingangsdrucks (pᵢₙ) in dem Bereich von 10 % bis 25 % liegt.

13. Verfahren nach einem der vorhergehenden Ansprüche, wobei zwischen dem wenigstens einen ersten betrachteten Zeitfenster und dem wenigstens einen zweiten betrachteten Zeitfenster ein Zeitabstand besteht, wobei sich der Eingangsdruck (pᵢₙ) in dem Zeitabstand zwischen dem ersten betrachteten Zeitfenster und dem zweiten betrachteten Zeitfenster allmählich und/oder schrittweise verändert hat oder verändert wurde.

14. System zum Bestimmen eines Fluiddrucks (p) an einem Fluiddurchflussmesser (5), der in einem Rohrleitungsnetz (1), das mit einem Fluid bei einem sich verändernden und/oder variablen Eingangsdruck (pᵢₙ) versorgt wird, installiert ist, wobei das System
- ein Head-End-System (HES), das über einen Zugriff auf Eingangsdruckinformationen verfügt, wobei die Eingangsdruckinformationen gestatten, einen Unterschied (Δp) zwischen dem Eingangsdruck (pᵢₙ) in wenigstens einem ersten betrachteten Zeitfenster und dem Eingangsdruck (pᵢₙ) in wenigstens einem zweiten betrachteten Zeitfenster zu bestimmen;
- wenigstens einen Fluiddurchflussmesser (5), der so eingerichtet ist, dass er wenigstens während des wenigstens einen ersten betrachteten Zeitfensters und während des wenigstens einen zweiten betrachteten Zeitfensters statistische Daten von mehreren Fluiddurchflussereignissen und/oder Fluidvolumenverbrauchsereignissen ansammelt und die angesammelten Daten in regelmäßigen Abständen und/oder auf Abruf an das Head-End-System (HES) liefert aufweist,
wobei das Head-End-System (HES) so eingerichtet ist, dass es auf der Grundlage
- einer Veränderung in den angesammelten statistischen Daten zwischen dem wenigstens einen ersten betrachteten Zeitfenster und dem wenigstens einen zweiten betrachteten Zeitfenster, und
- des Unterschieds (Δp) zwischen dem Eingangsdruck (pᵢₙ) in dem wenigstes einen ersten betrachteten Zeitfenster und dem Eingangsdruck (pᵢₙ) in dem wenigstens einen zweiten betrachteten Zeitfenster einen Fluiddruck (p) an dem Fluiddurchflussmesser (5) bestimmt.

15. System nach Anspruch 14, wobei das System so eingerichtet ist, dass es das Verfahren nach einem der Ansprüche 1 bis 13 durchführt.

## Revendications

1. Procédé de détermination d'une pression de fluide (p) au niveau d'un débitmètre (5) installé dans un réseau de canalisations (1) qui est alimenté en fluide sous une pression d'entrée variant et/ou variable (pᵢₙ), ledit procédé comprenant les étapes suivantes :
- l'enregistrement des informations de pression d'entrée, dans lequel les informations de pression d'entrée permettent de déterminer une différence (Δp) entre la pression d'entrée (pᵢₙ) dans au moins une première fenêtre temporelle considérée et la pression d'entrée (pᵢₙ) dans au moins une deuxième fenêtre temporelle considérée ;
- l'agrégation, dans le débitmètre (5), au moins pendant au moins une première fenêtre temporelle considérée et pendant au moins une deuxième fenêtre temporelle considérée, des données statistiques relatives à une pluralité d'événements de débit de fluide et/ou d'évènements de consommation de volume de fluide;
- la fourniture des données statistiques agrégées à intervalles réguliers et/ou à la demande à un système de tête de réseau (HES) qui a accès aux informations de pression d'entrée ; et
- la détermination, par le système de tête de réseau (HES), d'une pression de fluide (p) au niveau du débitmètre (5) sur la base de :
- une variation des données statistiques agrégées entre au moins une première fenêtre temporelle considérée et au moins une deuxième fenêtre temporelle considérée et
- la différence (Δp) entre la pression d'entrée (pᵢₙ) dans la au moins une première fenêtre temporelle considérée et la pression d'entrée (pin) dans la au moins une deuxième fenêtre temporelle considérée.

2. Procédé selon la revendication 1, dans lequel la variation des données statistiques agrégées correspond à un décalage d'un ou plusieurs pics caractéristiques de débit de fluide et/ou de pics de consommation de volume de fluide dans un histogramme d'événements, de au moins une première fenêtre temporelle considérée à au moins une deuxième fenêtre temporelle considérée.

3. Procédé selon la revendication 1 ou 2, comprenant en outre l'initiation d'une variation connue (Δp) de la pression d'entrée (pᵢₙ) entre au moins une première fenêtre temporelle considérée et au moins une deuxième fenêtre temporelle considérée.

4. Procédé selon une quelconque des revendications précédentes, dans lequel l'agrégation des données statistiques est effectuée pendant les mêmes fenêtres temporelles par une pluralité de débitmètres (5) installés dans le réseau de canalisations (1).

5. Procédé selon une quelconque des revendications précédentes, dans lequel le débitmètre (5) est un débitmètre à ultrasons alimenté par batterie et les données statistiques agrégées sont fournies par transfert sans fil au système de tête de réseau (HES).

6. Procédé selon une quelconque des revendications précédentes, dans lequel l'étape d'agrégation des données statistiques consiste à identifier des événements de débit de fluide caractéristique répétitifs causés par une ou plusieurs unités consommatrices qui présentent un profil de débit de fluide caractéristique constant et/ou un profil de consommation de volume de fluide caractéristique constant et/ou un profil de résistance hydraulique caractéristique constant.

7. Procédé selon une quelconque des revendications précédentes, dans lequel l'étape d'agrégation des données statistiques consiste à identifier les événements de débit de fluide maximal.

8. Procédé selon une quelconque des revendications précédentes, dans lequel la pression du fluide p est déterminée par la formule p = Δp·Q₂²/(Q₁² - Q₂²) si la pression d'entrée (pin) a varié de Δp = p - p₁, dans lequel p₁ est la pression d'entrée (pin) pendant la première fenêtre temporelle et dans lequel les données statistiques agrégées montrent un passage d'un débit de fluide caractéristique Q₁ pendant la première fenêtre temporelle à un autre débit de fluide caractéristique Q₂ pendant la deuxième fenêtre temporelle.

9. Procédé selon une quelconque des revendications précédentes, dans lequel au moins une première fenêtre temporelle considérée et au moins une deuxième fenêtre temporelle considérée sont choisies de manière à être les fenêtres temporelles entre lesquelles la pression d'entrée (pᵢₙ) diffère typiquement.

10. Procédé selon une quelconque des revendications précédentes, dans lequel l'étape d'agrégation des données statistiques consiste à identifier les événements caractéristiques de débit de fluide en filtrant les événements caractéristiques de consommation de volume de fluide associés.

11. Procédé selon une quelconque des revendications précédentes, dans lequel l'étape d'agrégation des données statistiques consiste à réduire la quantité de données aux paramètres indicatifs d'événements caractéristiques de débit de fluide et/ou d'événements caractéristiques de consommation de volume de fluide.

12. Procédé selon une quelconque des revendications précédentes, dans lequel les informations de pression d'entrée permettent en outre de déterminer une variation relative (Δp/pᵢₙ) de la pression d'entrée (pᵢₙ) entre au moins une première fenêtre temporelle considérée et au moins une deuxième fenêtre temporelle considérée, dans lequel la pression du fluide (p) au niveau du débitmètre (5) est déterminée par le système de tête de réseau (HES) seulement si la variation relative (Δp/pᵢₙ) de la pression d'entrée (pin) est comprise entre 10% et 25%.

13. Procédé selon une quelconque des revendications précédentes, dans lequel il existe un intervalle de temps entre au moins une première fenêtre temporelle considérée et au moins une deuxième fenêtre temporelle considérée, dans lequel la pression d'entrée (pᵢₙ) a ou a été modifiée progressivement et/ou par paliers pendant l'intervalle de temps entre la première fenêtre temporelle considérée et la deuxième fenêtre temporelle considérée.

14. Système de détermination d'une pression de fluide (p) d'un débitmètre (5) étant installé dans un réseau de canalisations (1) qui est alimenté en fluide sous une pression d'entrée variant et/ou variable (pᵢₙ), dans lequel le système comprend :
- un système de tête de réseau (HES) qui a accès à des informations de pression d'entrée, dans lequel les informations de pression d'entrée permettent de déterminer une différence (Δp) entre la pression d'entrée (pᵢₙ) dans au moins une première fenêtre temporelle considérée et la pression d'entrée (pᵢₙ) dans au moins une deuxième fenêtre temporelle considérée ;
- au moins un débitmètre (5) étant configuré pour agréger, au moins pendant au moins une première fenêtre temporelle considérée et pendant au moins une deuxième fenêtre temporelle considérée, des données statistiques relatives à une pluralité d'événements de débit de fluide et/ou d'évènements de consommation de volume de fluide et fournir les données agrégées à intervalles réguliers et/ou à la demande au système de tête de réseau (HES) ;
dans lequel le système de tête de réseau (HES) est configuré pour déterminer une pression de fluide (p) au niveau du débitmètre (5) sur la base :
- une variation des données statistiques agrégées entre au moins une première fenêtre temporelle considérée et au moins une deuxième fenêtre temporelle considérée et
- la différence (Δp) entre la pression d'entrée (pᵢₙ) dans la au moins une première fenêtre temporelle considérée et la pression d'entrée (pᵢₙ) dans la au moins une deuxième fenêtre temporelle considérée.

15. Système selon la revendication 14, dans lequel le système est configuré pour mettre en œuvre le procédé d'une quelconque des revendications 1 à 13.
